# EUROPÄISCHE PATENTSCHRIFT

(11) **EP 0 493 630 B1**
(45) Veröffentlichungstag und Bekanntmachung des Hinweises auf die Patenterteilung: **24.05.1995**
(21) Anmeldenummer: 90125833.5
(22) Anmeldetag: 31.12.1990
(51) Int. Cl.: B30B 15/06

(54) **Presspolster für Hochdruckpressen**
Press pad for high pressure presses
Coussinet de pressage pour presses à hautes pressions

(43) Veröffentlichungstag der Anmeldung: 08.07.1992
(73) Patentinhaber: RHEINISCHE FILZTUCHFABRIK GmbH, 52222 Stolberg/Rhld.. (DE)
(72) Erfinder: Hennecken, H.Bruno, W-5100 Aachen (DE); Schmitz, Paul, W-5100 Aachen (DE)
(74) Vertreter: Schubert, Siegmar, Dipl.-Ing.

(56) Entgegenhaltungen:
- DE-A- 2 650 642
- DE-A- 2 920 866
- DE-B- 2 358 556
- DATABASE, WPI, Nr. 87-287562 [41], Derwent Publications Ltd, Londen, GB;& JP-A-62 199 842 (NIPPON ELECTRIC GLASS, ASAHI SEKIMENKOGYO K.K.) 25-02-1986
- PATENT ABSTRACTS OF JAPAN, Band 11, Nr. 388 (M-652)[2835], 18. Dezember 1987;&JP-A-62 156 100 (HIROSHIMA KASEI K.K.) 11-07-1987

## Beschreibung

Die Erfindung betrifft ein Preßpolster aus asbestfreiem Material für Hochdruck-Etagenpressen für die Herstellung von Hochdrucklaminaten.

Mit derartigen Hochdruckpressen werden dekorative oder technische Hochdrucklaminate hergestellt. Sie arbeiten im allgemeinen in einem Druckbereich zwischen 85 und 100 Kp/cm² und bei Temperaturen zwischen etwa 130 und 160°C. Die Preßzeit liegt zwischen etwa 20 und 120 Minuten.

Bei derartigen Hochdruckpressen haben Preßpolster die Aufgabe, den Druck vollflächig auf das Laminat zu übertragen.

Die Preßpolster müssen den erwähnten hohen Drücken und auch den angegebenen Temperaturen standhalten können.

Ein Preßpolster muß in der Lage sein, sich wiederholt und über eine längere Zeit hinweg unter der Einwirkung von Druck so zu verformen, daß der Druck vollflächig auf das Preßgut (Laminat) übertragen wird. Darüberhinaus muß es in der Lage sein, sich von den wiederholten Pressungen soweit zu erholen, daß es für den nächsten Preßvorgang wieder genügend Verformungsfähigkeit besitzt. Diese Eigenschaften sind wesentliche Faktoren für die Lebensdauer eines Preßpolsters.

Ein Preßpolster muß auch eine gute Wärmeleitfähigkeit besitzen, unabhängig von der Dicke des Polsters.

Die Druckschrift "Information Circular: Special High Temperature Fabric for use in Laminating Presses" der Fa. Marathon Belting Limited vom 27. 10. 1989 beschreibt die Verwendung eines Preßpolsters aus Garn aus einem nicht schmelzenden aromatischen Polyamid, dem Kupferdraht zugegeben ist. Dieses Preßpolster wird bei Temperaturen von etwa 230°C eingesetzt. Der Pressenabdruck kann dieser Druckschrift nicht entnommen werden. Dies gilt auch für den Anteil der Kupferdrähte.

Demgegenüber liegt der Erfindung die Aufgabe zugrunde, ein Preßpolster für Hochdruck-Etagenpressen vorzuschlagen, das sich, verglichen mit den bisher hierfür eingesetzten Preßpolstern aus Kraftpapierlagen, durch einen besonders guten Druckausgleich über die Fläche auszeichnet, verbunden mit einem fühlbar verkürzten Produktionszylklus.

Die Lösung dieser Aufgabe erfolgt durch die Merkmale der Patentansprüche 1 bzw. 2.

Preßpolster aus dem erwähnten textilen Gewebe aus aromatischem Polyamid können den auf sie einwirkenden hohen Drücken in dem erwähnten Temperaturbereich ohne weiteres standhalten, wobei die Gewebebindung des Preßpolsters, welches erfindungsgemäß aus Garnen von Metallfäden besteht, für einen guten Druckausgleich über die Fläche des zu pressenden Laminats sorgt.

Die Wärmeleitfähigkeit wird fühlbar verbessert, wenn dem Garn Metallfäden in den angegebenen Anteilen beigegeben werden. Die Metallfäden werden hierbei so angeordnet, daß sie für einen guten Wärmeübergang zwischen den beiden Flächen des Preßpolsters sorgen. Im allgemeinen wird man die Metallfäden um die Garne herumwickeln, so daß jeder Metallfaser eine Vielzahl von Berührungspunkten an der Oberseite des Preßpolsters und gleichzeitig eine Vielzahl von Berührungspunkten an der Unterseite des Preßpolsters ausbildet.

In entsprechender Weise können auch mehrlagige Gewebe hergestellt werden, wobei die Vielzahl der metallischen Berührungspunkte an den Oberflächen der einzelnen Lagen dafür sorgt, daß die Wärme auch durch die mehrlagigen Gewebe gut geleitet wird.

Würde man wesentlich mehr als den erfindungsgemäß maximal vorgesehenen Anteil an Metallfäden verwenden, so wäre der Metallanteil zu hoch und würde angesichts der hohen Drücke bei derartigen Hochdruckpressen das Garn des Gewebes mechanisch zerstören.

Als Bindungsart des Gewebes wird Kette und Schuß bevorzugt. Wenn man Metallfäden zugibt, so wird ein Gewichtsanteil der Metallfäden zwischen 10% und 25% bevorzugt. Versuche mit Gewichtsanteilen von 13% und 25% haben zu guten Ergebnissen geführt.

Die Gewichtsanteile der gegebenenfalls beigegebenen Metallfäden wird man nach den jeweiligen Gegebenheiten und Anforderungen ausrichten, die von der betreffenden Hochdruckpresse an das Preßpolster gestellt werden.

Besonders gute Ergebnisse wurden mit Metallfäden aus Messing erreicht. Sie können aber auch aus Kupfer bestehen, gegebenenfalls auch aus einer Mischung beider Metalle bzw. Metallegierungen. Es ist aber auch denkbar, daß Metallfäden aus anderen Metallen mit Erfolg eingesetzt werden können.

Es sei erwähnt, daß die erfindungsgemäß verwendeten aromatischen Polyamide synthetische Garne sind, die nicht schmelzen. Bevorzugt werden Garne, die von der Firma DuPont unter dem Handelsnamen Nomex vertrieben werden oder auch solche, die von der genannten Firma unter dem Handelsnamen Kevlar vertrieben werden. Andere mögliche aromatische Polyamide sind Twaron der Firma Enka oder Conex der Firma Teijin. Ihnen ist gemeinsam, daß die Fasern bei Temperaturen unter 300°C keine Strukturveränderung erleiden. Oberhalb 380°C beginnt die Zersetzung. Diese Aufzählung ist aber nur beispielhaft und nicht beschränkend.

Es können auch Mischgarne aus den genannten Materialien miteinander oder mit anderen Garnen eingesetzt werden. Besonders gute Ergebnisse wurden mit Nomex erzielt.

Wichtig ist es auch, daß das Preßpolster asbestfrei ist.

Das erfindungsgemäß verwendete Garnmaterial ist in der Lage, den Anforderungen an Verformungs- und Erholungsfähigkeit in vollem Umfang und über längere Zeit zu entsprechen. Versuche haben dies bestätigt.

Die Polsterwirkung eines Preßpolsters hängt in hohem Maße von der Menge des eingearbeiteten textilen Materials ab. Es ist deshalb vorgesehen, durch Erhöhung der textilen Materialmenge in Verbindung mit allgemein bekannter Webtechnik das Flächengewicht des Preßpolsters zu erhöhen und damit auch die Polsterwirkung noch weiter zu verbessern.

Das Gewebe kann einlagig oder mehrlagig sein. Die Lagen sind in verschiedenen Bindungsarten in Kette (=Längsfäden) und Schuß (=Querfäden) miteinander verwoben.

Es können also auch Metallfäden mit weniger als 25 Gew.-%, bezogen auf das Gesamtgewicht des Preßpolsters, mit Erfolg eingesetzt werden.

Die Wärmeleitfähigkeit wird entsprechend verbessert, wenn man dem Gewebe Metallfäden im Gewichtsanteil bis max. 25 % des Gesamtgewichts beigibt. Diese Metallzugaben können beliebig bis zu 25 % variiert werden. Dadurch kann der Wärmedurchgang den Erfordernissen entsprechend gestaltet werden.

Die Metallfäden werden so angeordnet, daß sie für einen guten Wärmeübergang zwischen den beiden Flächen des Preßpolsters sorgen. Im allgemeinen werden die Metallfäden um die Garne gewickelt, so daß jeder Metallfaden eine Vielzahl von Berührungspunkten an der Oberfläche des Preßpolsters und gleichzeitig eine Vielzahl von Berührungspunkten an der Unterseite des Preßpolsters ausbildet.

Als Metallgarn (monofil oder multifil) kommen in Frage: Kupfer, Messing, andere elektrisch leitende Metalle oder beliebige Kombinationen und Legierungen der genannten Metalle.

Die Metallgarne können auf unterschiedliche Art und Weise in das Gewebe eingearbeitet werden:
a) als Metallfäden, die das textile Garn umwinden (wie vorbeschrieben)
b) als reines Metallgarn
c) oder als beliebige Kombination von a) und b).

Wei bereits erwähnt, wird als Bindungsart des Gewebes Kette und Schuß bevorzugt. Hierbei kann sowohl Kette als auch Schuß oder beide in beliebiger Kombination bestehen aus:
a) textilem Garn bzw. einer Garmischung
b) Metallgarn (monofil oder multifil)
c) textiles Garn oder textile Garnmischung umwunden mit Metallgarn
d) eine beliebige Kombination von a) - c)
Selbst bei Polstern mit hoher Polsterwirkung, also schweren, dicken oder mehrlagigen Geweben, die normalerweise durch ihre größere Dichte gegenüber dünnen Polstern im gewissen Umfang isolierend wirken, kann durch Metallzugabe der Wärmedurchgang beträchtlich verbessert werden und so zu einer Optimierung der Produktion beigetragen werden.

Durch den guten Wärmedurchgang bei den erfindungsgemäßen Preßpolstern wird der Anwender in die Lage versetzt, den Produktionszyklus zu verkürzen und/oder Energieeinsparungen zu erzielen.

Das gewählte Garnmaterial weist von sich aus die geforderte Temperaturbeständigkeit auf, da für aromatische Polyamide die obere, dauernd wirksame Temperaturbelastung bei 280°C liegt.

Die Druckbeständigkeit unter den geforderten Druckverhältnissen und über längere Zeitdauer wurde durch Tests nachgewiesen.

## Patentansprüche

1. Verwendung eines Preßpolsters aus asbestfreiem Material, bestehend aus einem textilen Gewebe aus einem Garn aus aromatischem Polyamid, das ggf. mit anderen Garnmaterialien gemischt ist und das, bezogen auf das Gesamtgewicht des Preßpolsters, Metallfäden in einem Anteil bis 25 Gewichtsprozent enthält, für Hochdruck-Etagenpressen für die Herstellung von Hochdrucklaminaten.

2. Preßpolster aus asbestfreiem Material für Hochdruck-Etagenpressen für die Herstellung von Hochdrucklaminaten, das aus einem textilen Gewebe aus einem Garn aus aromatischem Polyamid besteht, das ggf. mit anderen Garnmaterialien gemischt ist und das Metallfäden enthält,
**dadurch gekennzeichnet**,
daß das Preßpolster, bezogen auf sein Gesamtgewicht, Metallfäden in einem Anteil bis 25 Gewichtsprozent enthält.

3. Preßpolster nach Anspruch 1 oder 2,
**dadurch gekennzeichnet,**
daß der Gewichtsanteil der Metallfäden zwischen 10 % und 25 % beträgt.

4. Preßpolster nach Anspruch 1, 2 oder 3,
**dadurch gekennzeichnet**,
daß die Metallfäden aus Messing und/oder Kupfer bestehen oder aus anderen Metallen.

5. Preßpolster nach einem der Ansprüche 1 bis 4,
**dadurch gekennzeichnet,**
daß das Gewebe einlagig oder mehrlagig ist.

## Claims

1. Use of a press pad made from asbestos-free material, comprising a textile woven fabric made from a yarn consisting of aromatic polyamide, optionally mixed with other yarn materials and - in relation to the overall weight of the press pad - containing metal threads in a proportion of up to 25 % by weight, for high-pressure multi-platen presses for the production of high-pressure laminates.

2. A press pad made from asbestos-free material, for high-pressure multiplaten presses for the production of high-pressure laminates, comprising a textile woven fabric made from a yarn consisting of aromatic polyamide, optionally mixed with other yarn materials and containing metal threads,
**characterised in that**
in relation to its overall weight, the press pad contains metal threads in a proportion of up to 25 % by weight.

3. A press pad in accordance with claim 1 or 2,
**characterised in that**
the proportion of metal threads is between 10 and 25 % by weight.

4. A press pad in accordance with claim 1, 2 or 3,
**characterised in that**
the metal threads consist of brass and/or copper, or consist of other metals.

5. A press pad in accordance with one of claims 1 to 4,
**characterised in that**
the woven fabric is single-layer or multi-layer.

## Revendications

1. Emploi d'un coussinet de pressage en matériau sans amiante, constitué dans un tissu textile en fil de polyamide aromatique, qui, le cas échéant, est mélangé avec d'autres fils, et qui, rapporté au poids total du coussinet, contient des fils métalliques dans une proportion jusqu'à 25 pourcent en poids, pour des presses étagées haute pression pour la fabrication de laminés haute pression.

2. Coussinet de pressage en matériau sans amiante pour des presses étagées haute pression, pour la réalisation de laminés haute pression, qui est constitué d'un tissu de fil en polyamide aromatique qui, le cas échéant, est mélangé avec d'autres fils, et qui contient des fils métalliques, caractérisé en ce que le coussinet de pressage, rapporté à son poids total, contient des fils métalliques dans une proportion jusqu'à 25% en poids.

3. Coussinet de pressage selon la revendication 1 ou 2, caractérisé en ce que la proportion en poids des fils métalliques atteint entre 10% à 25%.

4. Coussinet de pressage selon la revendication 1, 2 ou 3, caractérisé en ce que les fils métalliques consistent en du laiton et/ou du cuivre, ou en d'autres métaux.

5. Coussinet de pressage selon l'une des revendications 1 à 4, caractérisé en ce que le tissu est monocouche ou en plusieurs couches.
